# EUROPÄISCHE PATENTSCHRIFT

(11) **EP 1 506 968 B1**
(45) Veröffentlichungstag und Bekanntmachung des Hinweises auf die Patenterteilung: **23.09.2009**
(21) Anmeldenummer: 04018830.2
(22) Anmeldetag: 09.08.2004
(51) Int. Cl.: C07F 9/6571

(54) **Verfahren zur Herstellung von 9,10-Dihydro-9-oxa-10-organyl-oxyphosphaphenanthren-10-oxid oder -thion und an den Phenylgruppen substituierten Derivativen desselben**
Process for the preparation of 9,10-dihydro-9-oxa-10-organyl-oxyphosphaphenanthren-10-oxide or thiono and derivatives of the same substituted on the phenyl groups
Procédé pour la préparation de 9,10-dihydro-9-oxa-10-organyl-oxyphosphaphénanthrène-10-oxydes ou thiono et leurs dérivés substitués sur le phényle

(30) Priorität: 15.08.2003 DE 10338131
(43) Veröffentlichungstag der Anmeldung: 16.02.2005
(73) Patentinhaber: Schill + Seilacher "Struktol" Aktiengesellschaft, 22113 Hamburg (DE)
(72) Erfinder: Dittrich, Uwe, Dr., 01445 Radebeul (DE); Just, Berthold, Dr., 22397 Hamburg (DE); Döring, Manfred, Prof. Dr., 76744 Wörth-Büchelberg (DE); Ciesielski, Michael, Dr., 06217 Merseburg (DE)
(74) Vertreter: UEXKÜLL & STOLBERG

(56) Entgegenhaltungen:
- EP-A- 0 787 738
- WO-A-03/070736
- GLOEDE, J. ET AL: "Ein stabiles Trichlor-oxyphosphoran mit einem Oxaphosphorinring" ZEITSCHRIFT FUER ANORGANISCHE UND ALLGEMEINE CHEMIE , 629(6), 998-1000 CODEN: ZAACAB; ISSN: 0044-2313, 2003, XP008038453
- BHATIA, M. S. ET AL: "Synthesis and reactions of 6-chloro-6H-dibenz[c,e][1,2] oxaphosphorin- 6-sulfide" INDIAN JOURNAL OF CHEMISTRY, SECTION B: ORGANIC CHEMISTRY INCLUDING MEDICINAL CHEMISTRY , 14B(10), 811-12 CODEN: IJSBDB; ISSN: 0376-4699, 1976, XP008038489
- BHATIA, M.S. ET AL: "Synthesis of 6-Chloro-6H-dibenz[ce][1.2]oxaphosphine-6- sulphide" CHEMISTRY & INDUSTRY (LONDON, UNITED KINGDOM) , (24), 1058 CODEN: CHINAG; ISSN: 0009-3068, 1975, XP008038487

## Beschreibung

Die Erfindung betrifft ein neues Verfahren zur Herstellung von 9,10-Dihydro-9-oxa-10-organyloxyphosphaphenanthren-10-oxidoder -thion sowie deren an den Phenylgruppen substituierten Derivaten.

Aus dem Stand der Technik ist ein Verfahren zur Herstellung von 9,10-Dihydro-9-oxa-10-alkoxyphosphaphenanthren und substituierten Derivaten desselben durch Alkoholyse von 9,10-Dihydro-9-oxa-10-halogenphosphaphenanthren und dessen substituierten Derivaten in Gegenwart stöchiometrischer Mengen Base, wie tertiären Aminen oder Ammoniak, bekannt. Siehe z. B. die EP-A-0 787 738, EP-A-0 304 782 sowie Phosphorus and Sulfur 1987, *31*, Seite 71.

Als alternative Edukte, jedoch nur für die Herstellung von 9,10--Dihydro-9-oxa-10-aryloxyphosphaphenanthren-Derivaten, werden in der DE-A-20 34 887 oder der US-A-3 702 878 Triphenylphosphite oder Kombinationen aus Triphenylphosphit/PCl₃ offenbart. Diese Verfahren sind jedoch mit der Verwendung sehr hoher Reaktionstemperaturen von etwa 200 °C verbunden. Ferner sind Umesterungsreaktionen, die von den genannten Aryloxy-Derivaten ausgehen können, nur mit langkettigen, schwer flüchtigen Alkoholen möglich. Durch Oxidation können daraus dann 9,10-Dihydro-9-oxa-10-aryloxyphosphaphenanthren-10-oxid oder -thion-Derivate gewonnen werden.

Aus der JP-A-2001270993 sind organische Phosphorverbindungen als Flammschutzadditive bekannt, bei denen gegebenenfalls substituierte9,10-Dihydro-9-oxa-10-phosphaphenanthren-10-oxid-Einheiten durch zweiwertige Kohlenwasserstoffreste, die gegebenenfalls Heteroatome oder funktionelle Gruppen enthalten, verbunden sind. In Bezug auf die Herstellung dieser Phosphorverbindungen wird auf die JP-A-63135396 und die JP-A-11106619 verwiesen. Der Abstract der JP-A-11106619 offenbart, dass bei der Herstellung halogenhaltige Verbindungen wie 1,2-Dichlorethan verwendet werden. Der Abstract der JP-A-63135396 offenbart, dass die Herstellung ausgehend von einem Phosphinsäurederivat erfolgt, das eine aromatische Diolgruppe aufweist, welches mit einer Glycidylverbindung wie Polyethylenglycoldiglycidylether in Lösungsmittel, vorzugsweise in Gegenwart eines Katalysators, z.B. Li, Mg, Cu der Fe, unter Erwärmen umgesetzt wird.

Ähnliche verbrückte Phosphorverbindungen wie in der JP-A-200127-0993 werden in der JP-A-57105456 und der JP-A-57105451 offenbart.

Die oben genannte Darstellung der 9,10-Dihydro-9-oxa-10-alkyloxyphosphaphenanthren-Derivate durch Alkoholyse der 9,10-Dihydro-9-oxa-10-halogenphosphaphenanthren-Derivate (Halogen z.B. Chlor) mittels Basen (EP-A-0 787 738) erfordert eine zweistufige vorhergehende Darstellung des 10-Halogen-Derivats mit einer unbefriedigenden Gesamtausbeute von unter 50 %.

Auch die Darstellung ausgehend von dem relativ teuren Edukt Triphenylphosphit bzw. Triphenylphosphit/PCl₃ ist durch nachteilige Reaktionsbedingungen und eine eingeschränkt zugängliche Produktpalette, nämlich nur aromatische Substituenten, gekennzeichnet. Um zu den gewünschten Endprodukten, wie 9,10-Dihydro-9-oxa-10-organyloxyphosphaphenanthren-10-oxid oder -thion und dessen substituierten Derivaten zu gelangen, müssen jeweils weitere Reaktionsschritte unter Einsatz von stöchiometrischen Mengen weiterer Reaktanten erfolgen (Umesterung und anschließende Oxidationsreaktion). Es sind also jeweils mehrere (mindestens zwei bis zu vier) separate chemische Reaktionen, jeweils begleitet von aufwendigen Reinigungs- und Trennoperationen durchzuführen.

Ein weiterer Nachteil der Verfahren des Standes der Technik ist, dass halogenhaltige Reaktanten in stöchiometrischen Mengen verwendet werden müssen.

Andererseits ist 9,10-Dihydro-9-oxa-10-phosphaphenanthren-10-oxid (DOP) kommerziell in industriellem Maßstab erhältlich und kann in Ausbeuten von über 95 % in einer einstufigen Synthese hergestellt werden, siehe z.B. die EP-A-0 806 429.

Die EP-A-1 279 719 beschreibt flammhemmende Faserbehandlungsmittel auf der Basis von Derivaten von DOP. Als Substituenten am Phosphor sind Alkyl-, Hydroxyalkyl-, Aralkyl-, Bernsteinsäureimid-, Hydroxy-, Alkoxy- oder Aralkoxygruppen vorgesehen. In der US-A-4 228 064 und der US-A-4 198 492 werden ähnliche Verbindungen zur Herstellung von flammhemmend ausgerüsteten Polyphenylenetherharz-Zusammensetzungen vorgeschlagen. Zur Herstellung wird auf die oben erörterte US-A-3 702 878 verwiesen.

Der vorliegenden Erfindung lag somit die Aufgabe zugrunde, ein Verfahren zur Herstellung von 9,10-Dihydro-9-oxa-10-organyloxyphosphaphenanthren-10-oxid oder -thion und Derivaten derselben, die für die Verwendung als Flammschutzmittel geeignet sind, zur Verfügung zu stellen, das die oben genannten Nachteile des Standes der Technik vermeidet. Insbesondere sollte das Verfahren von kommerziell leicht erhältlichem DOP bzw. Derivaten desselben ausgehen und einen möglichst einfachen und kostengünstigen sowie möglichst halogenfreien Syntheseweg liefern.

Diese Aufgaben werden durch die in Anspruch 1 definierte Erfindung gelöst. Bevorzugte Ausführungsformen ergeben sich aus den abhängigen Ansprüchen.

Die vorliegende Erfindung liefert somit ein Verfahren zur Herstellungvon9,10-Dihydro-9-oxa-10-organylphosphaphenanthren-10-oxid oder -thion und an den Phenylgruppen substituierten Derivaten derselben, bei dem:
(a) 9,10-Dihydro-9-oxa-10-phosphaphenanthren-10-oxid (DOP) oder ein Derivat desselben in Gegenwart von mindestens einem ein-oder mehrwertigen Alkohol mit mindestens einem Orthocarbonsäureester unter Bildung eines ersten Zwischenprodukts umgesetzt wird,
(b) das Zwischenprodukt aus Stufe (a) gegebenenfalls mit mindestens einem weiteren ein- oder mehrwertigen Alkohol unter Bildung eines weiteren Zwischenprodukts umgesetzt wird und
(c) das Zwischenprodukt aus den Stufen (a) oder (b) durch Zugabe von Oxidationsmittel in 9,10-Dihydro-9-oxa-10-organyloxyphosphaphenanthren-10-oxid oder -thion oder ein an den Phenylgruppen substituiertes Derivat derselben überführt wird.

Soweit in dieser Anmeldung von ein- oder mehrwertigen Molekülresten die Rede ist, z.B. ein- oder mehrwertige Kohlenwasserstoffreste, ist damit die Bindungswertigkeit dieser Molekülreste gemeint. In Bezug auf Alkohole bedeutet Wertigkeit die Zahl der OH-Gruppen des Alkohols. Diese können ferner mono-, di-, tri-, tetra- oder polyfunktionell sein, d.h. unterschiedliche funktionelle Gruppen aufweisen. Siehe zum Beispiel Römpp Chemie-Lexikon, 9. Auflage, Band 1, 1989, Seite 106, Eintrag "Alkohole"; Seite 417, Einträge "Bindigkeit" bzw. "Bindungswertigkeit". Siehe ferner Fresenius, Görlitzer, *Organisch-chemische Nomenklatur,* Wissenschaftliche Verlagsgesellschaft mbH, Stuttgart 1989, Seiten 11, 28 bis 32.

Das erfindungsgemäße Verfahren hat insbesondere den Vorteil, dass es in Form einer Eintopfsynthese, d.h. in einem einzigen Reaktionsgefäß, mit ausgezeichneten Ausbeuten ohne aufwendige Reinigungsoperationen zwischen den Reaktionsstufen durchgeführt werden kann. Man erhält das gewünschte Produkt in einer Reinheit von über 90 % nach Gaschromatographie. Insbesondere kann auf die Feindestillation zur Produktreinigung verzichtet werden.

Ferner weist das erfindungsgemäße Verfahren den Vorteil auf, dass es halogenfrei arbeiten kann.

Die Ausführungsform der Erfindung, bei der mehrwertige Alkohole verwendet werden, ermöglicht die Darstellung von mehrwertigen ("verbrückten") Derivaten, die bei der anschließenden Verwendung als Flammschutzmittel in polymeren Netzwerken vorteilhafter als nicht-verbrückte Derivate in die Polymere eingebunden werden können und eine verbesserte Flammschutzwirkung aufweisen können.

Bei der halogenfreien Durchführung des Verfahrens wird Salzsäure allenfalls als Katalysator in den Reaktionsstufen (a) und/oder (b) verwendet. Im Rahmen der Entfernung von überschüssigem Alkohol kann die Salzsäure zudem wiedergewonnen werden, wodurch der Anfall von Halogenidabfällen vollständig vermieden wird.

Bei Einsatz saurer Harze als Katalysatoren ist ferner eine kontinuierliche Verfahrensführung möglich. Dabei kann die kontinuierlich durchgeführte, mehrstufige Reaktion in einem Reaktionsgefäß durchgeführt werden, im Gegensatz zu den Verfahren des Standes der Technik, die im Allgemeinen mehrere separate, d.h. räumlich getrennte, aufwendigere Reaktionen ausgehend von zum Teil nicht industriell in großem Maßstab verfügbaren Edukten erfordern.

Weitere Katalysatoren, die erfindungsgemäß verwendet werden können, sind organische Sulfonsäuren, z.B. p-Toluolsulfonsäure, die ein bevorzugter Katalysator ist.

Als Edukt in Stufe (a) des erfindungsgemäßen Verfahrens kann also DOP oder ein Derivat desselben gemäß den Formeln Ia oder Ib 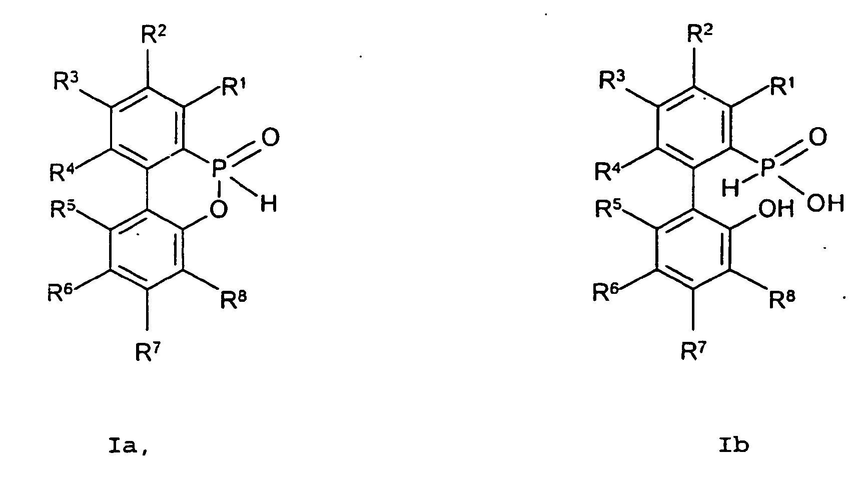 verwendet werden, worin R¹ bis R⁸ unabhängig voneinander ein Wasserstoffatom, Halogenatom oder eine Kohlenwasserstoffgruppe sind, wobei die Kohlenwasserstoffgruppen gegebenenfalls ein oder mehrere Heteroatome ausgewählt aus Sauerstoff, Stickstoff, Schwefel, Phosphor, Silicium und Halogen enthalten, und zwei oder mehr der Reste R¹ bis R⁸ gegebenenfalls unter Ausbildung von einem oder mehreren Cyclen verknüpft sind.

Es sei darauf hingewiesen, dass für die Zwecke dieser Anmeldung auch Verbindungen der Formel Ib als DOP-Derivate bezeichnet werden, obwohl sie nicht das (heteroatomhaltige) Phenanthren-Grundgerüst aufweisen, sondern (substituierte) o,o'-Hydroxybiphenylphosphinsäuren sind.

In den Formeln Ia/b können die Reste R¹ bis R⁸ unabhängig voneinander die folgenden Bedeutungen haben:
Alkoxy: geradkettige oder verzweigte Alkylgruppen mit 1 bis 30 Kohlenstoffatomen (wie vorstehend genannt), welche über ein Sauerstoffatom (-O-) an das Gerüst, d.h. die 9,10-Dihydro-9-oxa-10-phosphaphenanthren-10-oxid-Struktur, gebunden sind.
Alkylthio: geradkettige oder verzweigte Alkylgruppen mit 1 bis 30 Kohlenstoffatomen (wie vorstehend genannt), welche über ein Schwefelatom (-S-) an das Gerüst gebunden sind.

Gegebenenfalls substituiertes Alkyl: gesättigte, geradkettige oder verzweigte Kohlenwasserstoffreste, insbesondere mit 1 bis 10 Kohlenstoffatomen, z.B. C₁- bis C₆-Alkyl wie Methyl, Ethyl, Propyl, 1-Methylethyl, Butyl, 1-Methylpropyl, 2-Methylpropyl, 1,1-Dimethylethyl, Pentyl, 1-Methylbutyl, 2-Methylbutyl, 3-Methylbutyl, 2,2-Dimethylpropyl, 1-Ethylpropyl, Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Etylbutyl, 2-Etylbutyl, 1,3-Trimethylpropyl, 1,2,2-Trimethylpropyl, 1-Ethyl-1-methylpropyl und 1-Ethyl-2-methylpropyl.

Gegebenenfalls substituiertes Alkenyl: gesättigte, geradkettige oder verzweigte Kohlenwasserstoffreste, insbesondere mit 2 bis 10 Kohlenwasserstoffatomen und einer Doppelbindung in einer beliebigen Position, z.B. C₂- bis C₆-Alkenyl wie Ethenyl, 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 1,1,2-Trimethyl-2-propenyl, 1-Ethyl-1-methyl-2-propenyl, 1-Ethyl-2-methyl-2-propenyl und 1-Ethyl-2-methyl-2-propenyl.

Gegebenenfalls substituiertes Alkinyl: geradkettige oder verzweigte Kohlenwasserstoffgruppen, insbesondere mit 2 bis 20 Kohlenwasserstoffatomen und einer Dreifachbindung in einer beliebigen Position, z.B. C₂- bis C₆-Alkinyl wie Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl und 1-Ethyl-1-methyl-2-propinyl.

Ein gegebenenfalls substituierter, gesättigter oder ein-oder zweifach ungesättigter Ring, welcher neben Kohlenstoffatomen ein bis drei der folgenden Heteroatome als Ringglieder enthalten kann: Sauerstoff, Schwefel und Stickstoff, beispielsweise Carbocyclen wie Cyclopropyl, Cyclopentyl, Cyclohexyl, Cyclopent-2-enyl, Cyclohex-2-enyl, 5- bis 6-gliedrige, gesättigte oder ungesättigte Heterocyclen, enthaltend ein bis drei Stickstoffatome und/oder ein Sauerstoff- oder Schwefelatom wie 2-Tetrahydrofuranyl, 3-Tetrahydrofuranyl, 2-Tetrahydrothienyl, 3-Tetrahydrothienyl, 2-Pyrrolidinyl, 3-Pyrrolidinyl, 3-Isoxazolidinyl, 4-Isoxazolidinyl, 5-Isoxazolidinyl, 3-Isothiazolidinyl, 4-Isothiazolidinyl, 5-Isothiazolidinyl, 3-Pyrazolidinyl, 4-Pyrazolidinyl, 5-Pyrazolidinyl, 2-Oxazolidinyl, 4-Oxazolidinyl, 5-Oxazolidinyl, 2-Thiazolidinyl, 4-Thiazolidinyl, 5-Thiazolidinyl, 2-Imidazolidinyl, 4-Imidazolidinyl, 1,2,4-Oxadiazolidin-3-yl, 1,2,4-Oxadiazolidin-5-yl, 1,2,4-Thiadiazolidin-3-yl, 1,2,4-Thiadiazolidin-5-yl, 1,2,4-Triazolidin-3-yl, 1,3,4-Oxadiazolidin-2-yl, 1,3,4-Thiadiazolidin-2-yl, 1,3,4-Triazolidin-2-yl, 2,3-Dihydrofur-2-yl, 2,3-Dihydrofur-3-yl, 2,4-Dihydrofur-2-yl, 2,4-Dihydrofur-3-yl, 2,3-Dihydrothien-2-yl, 2,3-Dihydrothien-3-yl, 2,4-Dihydrothien-2-yl, 2,4-Dihydrothien-3-yl, 2,3-Pyrrolin-2-yl, 2,3-Pyrrolin-3-yl, 2,4-Pyrrolin-2-yl, 2,4-Pyrrolin-3-yl, 2,3-Isoxazolin-3-yl, 3,4-Isoxazolin-3-yl, 4,5-Isoxazolin-3-yl, 2,3-Isoxazolin-4-yl, 3,4-Isoxazolin-4-yl, 4,5-Isoxazolin-4-yl, 2,3-Isoxazolin-5-yl, 3,4-Isoxazolin-5-yl, 4,5-Isoxazolin-5-yl, 2,3-Isothiazolin-3-yl, 3,4-Isothiazolin-3-yl, 4,5-Isothiazolin-3-yl, 2,3-Isothiazolin-4-yl, 3,4-Isothiazolin-4-yl, 4,5-Isothiazolin-4-yl, 2,3-Isothiazolin-5-yl, 3,4-Isothiazolin-5-yl, 4,5-Isothiazolin-5-yl, 2,3-Dihydropyrazol-1-yl, 2,3-Dihydropyrazol-2-yl, 2,3-Dihydropyrazol-3-yl, 2,3-Dihydropyrazol-4-yl, 2,3-Dihydropyrazol-5-yl, 3,4-Dihydropyrazol-1-yl, 3,4-Dihydropyrazol-3-yl, 3,4-Dihydropyrazol-4-yl, 3,4-Dihydropyrazol-5-yl, 4,5-Dihydropyrazol-1-yl, 4,5-Dihydropyrazol-3-yl, 4,5-Dihydropyrazol-4-yl, 4,5-Dihydropyrazol-5-yl, 2,3-Dihydrooxazol-2-yl, 2,3-Dihydrooxazol-3-yl, 2,3-Dihydrooxazol-4-yl, 2,3-Dihydrooxazol-5-yl, 3,4-Dihydrooxazol-2-yl, 3,4-Dihydrooxazol-3-yl, 3,4-Dihydrooxazol-4-yl, 3,4-Dihydrooxazol-5-yl, 3,4-Dihydrooxazol-2-yl, 3,4-Dihydrooxazol-3-yl, 3,4-Dihydrooxazol-4-yl, 2-Piperidinyl, 3-Piperidinyl, 4-Piperidinyl, 1,3-Dioxan-5-yl, 2-Tetrahydropyranyl, 4-Tetrahydropyranyl, 2-Tetrahydrothienyl, 3-Tetrahydropyridazinyl, 4-Tetrahydropyridazinyl, 2-Tetrahydropyrimidinyl, 4-Tetrahydropyrimidinyl, 5-Tetrahydropyrimidinyl, 2-Tetrahydropyrazinyl, 1,3,5-Tetrahydro-triazin-2-yl und 1,2,4-Tetrahydrotriazin-3-yl, vorzugsweise 2-Tetrahydrofuranyl, 2-Tetrahydrothienyl, 2-Pyrrolidinyl, 3-Isoxazolidinyl, 3-Isothiazolidinyl, 1,3,4-Oxazolidin-2-yl, 2,3-Dihydrothien-2-yl, 4,5-Isoxazolin-3-yl, 3-Piperidinyl, 1,3-Dioxan-5-yl, 4-Piperidinyl, 2-Tetrahydropyranyl, 4-Tetrahydropyranyl.

Ein gegebenenfalls substituiertes ein- oder zweikerniges aromatisches Ringsystem, welches neben Kohlenstoffatomen ein bis vier Stickstoffatome oder ein oder zwei Stickstoffatome und ein Sauerstoff- oder Schwefelatom oder ein Sauerstoff- oder Schwefelatom als Ringglieder enthalten kann, d.h. Arylreste wie Phenyl und Naphthyl, vorzugsweise Phenyl oder 1- oder 2-Naphthyl, und Hetarylreste, beispielsweise 5-Ring-Heteroaromaten enthalten ein bis drei Stickstoffatome und/oder ein Sauerstoff- oder Schwefelatom wie 2-Furyl, 3-Furyl, 2-Thienyl, 3-Thienyl, 1-Pyrrolyl, 2-Pyrrolyl, 3-Pyrrolyl, 3-Isoxazolyl, 4-Isoxazolyl, 5-Isoxazolyl, 3-Isothiazolyl, 4-Isothiazolyl, 5-Isothiazolyl, 1-Pyrazolyl, 3-Pyrazolyl, 4-Pyrazolyl, 5-Pyrazolyl, 2-Oxazolyl, 4-Oxazolyl, 5-Oxazolyl, 2-Thiazolyl, 4-Thiazolyl, 5-Thiazolyl, 1-Imidazolyl, 2-Imidazolyl, 4-Imidazolyl, 1,2,4-Oxadiazol-3-yl, 1,2,4-Oxadiazol-5-yl, 1,2,4-Thiadiazol-3-yl, 1,2,4-Thiadiazol-5-yl, 1,2,5-Triazol-3-yl, 1,2,3-Triazol-4-yl, 1,2,3-Triazol-5-yl, 5-Tetrazolyl, 1,2,3,4-Thiatriazol und 1,2,3,4-Oxatriazol-5-yl, insbesondere3-Isoxazolyl, 5-Isoxazolyl, 4-Oxazolyl, 4-Thiazolyl, 1,3,4-Oxadiazol-2-yl und 1,3,4-Thiadiazol-2-yl.

Sechsring-Heteroaromaten enthaltend ein bis vier Stickstoffatome als Heteroatome wie 2-Pyridinyl, 3-Pyridinyl, 4-Pyridinyl, 3-Pyradazinyl, 4-Pyradazinyl, 2-Pyrimidinyl, 4-Pyrimidinyl, 5-Pyrimidinyl, 2-Pyrazinyl, 1,3,5-Triazin-2-yl, 1,2,4-Triazin-3-yl und 1,2,4,5-Tetrazin-3-yl, insbesondere 2-Pyridinyl, 3-Pyridinyl, 4-Pyridinyl, 2-Pyrimidinyl, 4-Pyrimidinyl, 2-Pyrazinyl und 4-Pyrazinyl.

Der Zusatz "gegebenenfalls substituiert" in Bezug auf Alkyl-, Alkenyl- und Alkinylgruppen soll zum Ausdruck bringen, dass diese Gruppen partiell oder vollständig halogeniert sein können (d.h. die Wasserstoffatome dieser Gruppen können teilweise oder vollständig durch gleiche oder verschiedene Halogenatome wie vorstehend genannt (vorzugsweise Fluor, Chor und Brom, insbesondere Fluor und Chlor) ersetzt sein können und/oder einen bis drei, insbesondere einen der folgenden Reste tragen können:

Nitro, Cyano, C₁- bis C₄-Alkoxy, C₁- bis C₄-Alkoxycarbonyl oder ein gegebenenfalls substituiertes ein- oder zweikerniges aromatisches Ringsystem, welches neben Kohlenstoffatomen ein bis vier Stickstoffatome oder ein oder zwei Stickstoffatome und ein Sauerstoff- oder Schwefelatom oder ein Sauerstoff- oder Schwefelatom als Ringglieder enthalten kann, d.h. Arylreste wie Phenyl und Naphthyl, vorzugsweise Phenyl oder 1- oder 2-Naphthyl, und Hetarylreste, beispielsweise 5-Ring-Heteroaromaten enthalten ein bis drei Stickstoffatome und/oder ein Sauerstoff- oder Schwefelatom wie 2-Furyl, 3-Furyl, 2-Thienyl, 3-Thienyl, 1-Pyrrolyl, 2-Pyrrolyl, 3-Pyrrolyl, 3-Isoxazolyl, 4-Isoxazolyl, 5-Isoxazolyl, 3-Isothiazolyl, 4-Isothiazolyl, 5-Isothiazolyl, 1-Pyrazolyl, 3-Pyrazolyl, 4-Pyrazolyl, 5-Pyrazolyl, 2-Oxazolyl, 4-Oxazolyl, 5-Oxazolyl, 2-Thiazolyl, 4-Thiazolyl, 5-Thiazolyl, 1-Imidazolyl, 2-Imidazolyl, 4-Imidazolyl, 1,2,4-Oxadiazol-3-yl, 1,2,4-Oxadiazol-5-yl, 1,2,4-Thiadiazol-3-yl, 1,2,4-Thiadiazol-5-yl, 1,2,5-Triazol-3-yl, 1,2,3-Triazol-4-yl, 1,2,3-Triazol-5-yl, 5-Tetrazolyl, 1,2,3,4-Thiatriazol und 1,2,3,4-Oxatriazol-5-yl, insbesondere3-Isoxazolyl, 5-Isoxazolyl, 4-Oxazolyl, 4-Thiazolyl, 1,3,4-Oxadiazol-2-yl und 1,3,4-Thiadiazol-2-yl.

Ferner können die Substituenten Sechsring-Heteroaromaten sein enthaltend ein bis vier Stickstoffatome als Heteroatome wie 2-Pyridinyl, 3-Pyridinyl, 4-Pyridinyl, 3-Pyradazinyl, 4-Pyradazinyl, 2-Pyrimidinyl, 4-Pyrimidinyl, 5-Pyrimidinyl, 2-Pyrazinyl, 1,3,5-Triazin-2-yl, 1,2,4-Triazin-3-yl und 1,2,4,5-Tetrazin-3-yl, insbesondere 2-Pyridinyl, 3-Pyridinyl, 4-Pyridinyl, 2-Pyrimidinyl, 4-Pyrimidinyl, 2-Pyrazinyl und 4-Pyrazinyl.

Der Zusatz "gegebenenfalls substituiert" in Bezug auf die cyclischen (gesättigten, ungesättigten oder aromatischen) Gruppen soll zum Ausdruck bringen, dass diese Gruppen partiell oder vollständig halogeniert sein können (d. h. die Wasserstoffatome dieser Gruppen können teilweise oder vollständig durch gleiche oder verschiedene Halogenatome wie vorstehend genannt (vorzugsweise Fluor, Chor und Brom, insbesondere Fluor und Chlor) ersetzt sein können) und/oder einen bis drei, vorzugsweise einen der folgenden Reste tragen können: Nitro, Cyano, C₁- bis C₄-Alkyl, C₁- bis C₄-Alkoxy und C₁- bis C₄-Alkoxycarbonyl.

Die bei den Resten genannten ein- oder zweikernigen aromatischen oder heteroaromatischen Systeme können ihrerseits partiell oder vollständig halogeniert sein, d.h. die Wasserstoffatome dieser Gruppen können partiell oder vollständig durch Halogenatome wie Fluor, Chlor, Brom und Iod, vorzugsweise Fluor und Chlor ersetzt sein.

Diese ein- oder zweikernigen aromatischen oder heteroaromatischen Systeme können neben den bezeichneten Halogenatomen zusätzlich ein bis drei der folgenden Substituenten tragen:
Nitro, Cyano, Thiocyanato;
Alkyl, insbesondere C₁- bis C₆-Alkyl wie vorstehend genannt,
C₁- bis C₃₀-Alkoxy,
C₁- bis C₃₀-Alkylthio,
C₁- bis C₄-Alkylamino,
C₁- bis C₆-Alkylcarbonyl,
C₁- bis C₆-Alkoxycarbonyl,
C₁- bis C₆-Alkylaminocarbonyl,
C₁- bis C₆-Alkylcarboxyl,
C₁- bis C₆-Alkylcarbonylamino,
C₃- bis C₇-Cycloalkyl wie Cyclopropyl, Cyclobutyl, Cyclopentyl, Cyclohexyl und Cycloheptyl, vorzugsweise Cyclopropyl, Cyclopentyl und Cyclohexyl, insbesondere Cyclopropyl;
C₃- bis C₇- Cycloalkoxy wie Cyclopropyloxy, Cyclobutyloxy, Cyclopentyloxy, Cyclohexyloxy und Cycloheptyloxy, vorzugsweise Cyclopentyloxy und Cyclohexyloxy, insbesondere Cyclohexyloxy;
C₃- bis C₇-Cycloalkylthio wie Cyclopropylthio, Cyclobutylthio, Cyclopentylthio, Cyclohexylthio und Cycloheptylthio, vorzugsweise Cyclohexylthio;
C₃- bis C₇-Cycloalkylamino wie Cyclopropylamino, Cyclobutylamino, Cyclopentylamino, Cyclohexylamino und Cycloheptylamino, vorzugsweise Cyclopropylamino und Cyclohexylamino, insbesondere Cyclopropylamino;
weitere Reste für gegebenenfalls substituierte ein- oder zweikernige aromatische oder heteroaromatische Reste:
Alkenyl, Alkinyl, Halogenalkenyl, Halogenalkinyl, Alkenyloxy, Alkinyloxy, Halogenalkenyloxy, Halogenalkinyloxy, Alkenylthio, Alkinylthio, Alkylsulfoxy, Alkylsulfonyl, Alkenylsulfoxy, Alkinylsulfoxy, Alkinylsulfonyl.

Obwohl die Reste R¹ bis R⁸ Halogen sein können, wie Fluor, Chlor, Brom oder Iod, vorzugsweise Chlor oder Brom, sind Derivate bevorzugt, bei denen keiner der Reste R¹ bis R⁸ ein Halogenatom ist. Entsprechend sind Derivate bevorzugt, bei denen keiner der Reste R¹ bis R¹¹ Halogenatome aufweist, wobei R⁹ bis R¹¹ wie nachfolgend definiert sind. Halogenfreie Derivate sind also erfindungsgemäß bevorzugt.

Obwohl ein Substitutionsmuster möglich ist, bei dem alle Reste R¹, R², R³ und R⁴ unabhängig voneinander ein Halogenatom oder eine Kohlenwasserstoffgruppe sind, betrifft eine bevorzugte Ausführungsform den Fall, dass von den Resten R¹, R², R³ und R⁴ mindestens zwei, vorzugsweise mindestens drei Wasserstoffatome sind, wobei insbesondere R¹, R², R³ und R⁴ alle Wasserstoffatome sind.

Obwohl ein Substitutionsmuster möglich ist, bei dem alle Reste R⁵, R⁶, R⁷ und R⁸ unabhängig voneinander ein Halogenatom oder eine Kohlenwasserstoffgruppe sind, betrifft eine bevorzugte Ausführungsform den Fall, dass von den Resten R⁵, R⁶, R⁷ und R⁸ mindestens zwei, vorzugsweise mindestens drei Wasserstoffatome sind, wobei insbesondere R⁵, R⁶, R⁷ und R⁸ alle Wasserstoffatome sind.

Dabei sind Substitutionsmuster an den aromatischen Ringsystemen bevorzugt, bei denen jeweils zwei der Reste R¹, R², R³ und R⁴ und der Reste R⁵, R⁶, R⁷ und R⁸ ein Halogenatom oder eine Kohlenwasserstoffgruppe sind, wobei bevorzugter nur jeweils einer der Reste R¹, R², R³ und R⁴ und der Reste R⁵, R⁶, R⁷ und R⁸ ein Halogenatom oder eine Kohlenwasserstoffgruppe ist und insbesondere alle Reste R¹ bis R⁸ Wasserstoffatome sind.

Für die im vorhergehenden Absatz beschriebenen bevorzugten Ausführungsformen sind C₁- bis C₆-Alklgruppen als Kohlenwasserstoffgruppen bevorzugt. Falls die Kohlenwasserstoffgruppen ein Heteroatom enthalten, sind C₁- bis C₆-Alkoxygruppen die bevorzugten Reste für diese Ausführungsformen. Das Heteroatom ist dann also Sauerstoff.

In Stufe (a) der erfindungsgemäßen Reaktion wird also DOP oder ein Derivat desselben, insbesondere ein Derivat gemäß den obigen Formeln Ia oder Ib, in Gegenwart von mindestens einem ein- oder mehrwertigen Alkohol mit mindestens einem Orthocarbonsäureester umgesetzt, wobei sich ein erstes Zwischenprodukt bildet.

Vorzugsweise wird in Stufe (a) ein Orthocarbonsäureester der Formel II

R⁹C(OR¹⁰)₃ (II)

verwendet, in der R⁹ ein Wasserstoffatom oder eine Kohlenwasserstoffgruppe ist und die Reste R¹⁰ gleiche oder unterschiedliche Kohlenwasserstoffgruppen sind, die gegebenenfalls ein oder mehrere Heteroatome ausgewählt aus Sauerstoff, Stickstoff, Schwefel, Phosphor, Silicium und Halogen enthalten. vorzugsweise wird in Stufe (a) ein Alkohol der Formel IIIa

R¹¹(OH)_{y} (IIIa)

verwendet, in der R¹¹ eine ein- oder mehrwertige Kohlenwasserstoffgruppe ist, die gegebenenfalls ein oder mehrere Heteroatome ausgewählt aus Sauerstoff, Stickstoff, Schwefel, Phosphor, Silicium und Halogen enthält, und y von 1 bis 10, vorzugsweise 1 bis 4, insbesondere 1, 2, 3 oder 4 beträgt.

In einer bevorzugten Ausführungsform ist R⁹ ein Wasserstoffatom, eine Alkyl- oder eine Arylgruppe, wobei die Begriffsdefinitionen zu den Resten R¹ bis R⁸ entsprechend gelten, und ein Wasserstoffatom oder eine Methylgruppe sind besonders bevorzugt.

Bevorzugte Reste R¹⁰ und R¹¹ sind unabhängig voneinander ausgewählt aus Alkyl-, Alkenyl-, Alkinyl-, Aryl- und Glycidylgruppen, wobei die Begriffsdefinitionen zu den Resten R¹ bis R⁸ entsprechend gelten, und Methyl, Ethyl und Allyl sind besonders bevorzugt. In einer weiteren bevorzugten Ausführungsform sind die Reste R¹⁰ und R¹¹ gleich. Weitere Beispiele für die Reste R¹⁰ und R¹¹ sind die oben in Bezug auf die Definitionen von R¹ bis R⁸ aufgelisteten, gegebenenfalls substituierten Alkyl-, Alkenyl- und Alkinylreste sowie die oben genannten, gegebenenfalls substituierten, gesättigten oder ein- oder zweifach ungesättigten Ringe.

Als Orthocarbonsäureester sind Orthoameisensäureester, insbesondere Trimethylorthoformiat, Triethylorthoformiat oder Triallylorthoformiat bevorzugt. Es können aber auch Orthocarbonsäureester verwendet werden, bei denen die Reste R¹⁰ verschieden sind.

Als Alkohole sind insbesondere Methanol, Ethanol, Propanol, Isopropanol und Butanol bevorzugt. Als mehrwertige Alkohole sind Diole, Glykole, Polyglykole, drei- und vierwertige Alkohole, z.B. Ethylenglykol, Glycerin und Pentaerythrit bevorzugt.

Weitere Beispiele für zwei-, drei- oder vierwertige Alkohole sind im Folgenden aufgeführt.

Beispiele für zweiwertige Reste in Alkoholen der Formel R¹¹(OH)₂ sind:
(CH₂)ₙ, (CH₂)ₙO(CH₂)ₘ, (CH₂)ₙNR(CH₂)ₘ, (CH₂)ₙN(COR)(CH₂)ₘ, (CH₂)ₙS(CH₂)ₘ, OPR(OCH₂CH₂)₂, (CH₂)ₙOOC∼∼COO(CH₂)ₘ, (CH₂)ₙX∼∼X(CH₂)ₘ, 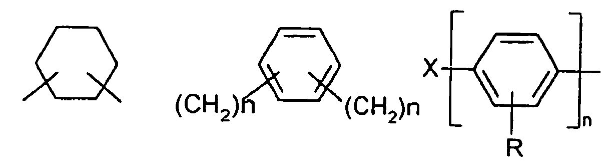 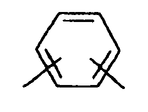 mit X = (CR₂)ₘ, SO₂, SO, S, O, NR, OPR und R = H oder Alkyl und (COR) = Acyl; ∼∼ = aliphatische, cycloaliphatische oder aromatische Brücken; m,n sind jeweils ganze Zahlen und 1 oder größer, vorzugsweise 1 bis 10, 1 bis 5 oder 1 bis 3, z.B. 2 oder 4.

Beispiele für dreiwertige Reste in Alkoholen der Formel R¹¹(OH)₃ sind:

RC(CH₂)ₗ(CH₂)ₘ(CH₂)ₙ

RSi (OCH₂CH₂)₃

B(OCH₂CH₂)₃

O=P (CH₂CH₂)₃

OP(OCH₂CH₂)₃

N(CH₂)ₗ(CH₂)ₘ(CH₂)ₙ

M(COO(CH₂)ₗ)(COO(CH₂)ₘ)(COO(CH₂)ₙ)

Ether dreiwertiger Alkohole, z.B. Triether von Glycerin oder 1,1,1-Tris(hydroxymethyl)propan 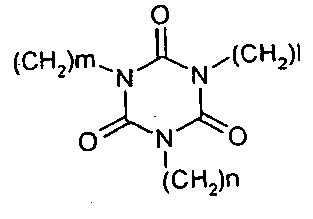 wobei R, m, n wie oben für die zweiwertigen Reste definiert sind und l wie m und n definiert ist und M ein dreiwertiger Kohlenwasserstoffrest ist und die Estergruppen an demselben oder verschiedenen C-Atomen angeordnet sind.

Beispiele für vierwertige Reste in Alkoholen der Formel R¹¹(OH)₄ sind:

C(CH₂)ₗ(CH₂)ₘ(CH₂)ₙ(CH₂)ₒ

Si(OCH₂CH₂)₄

M'(COO(CH₂)ₗ)(COO(CH₂)ₘ)(COO(CH₂)ₙ)(COO(CH₂)ₒ)

(CH₂)ₙ(CH₂)ₒNOC∼∼CON(CH₂)ₗ(CH₂)ₘ,

(CH₂)ₙ(CH₂)ₒN-∼∼-N(CH₂)ₗ(CH₂)ₘ

wobei ∼∼, R, l, m, n wie oben für die dreiwertigen Reste definiert sind und o wie l, m, n definiert ist und M' ein vierwertiger Kohlenwasserstoffrest ist und die Estergruppen an demselben oder verschiedenen C-Atomen angeordnet sind.

Das nach den oben beschriebenen bevorzugten Ausführungsformen der Erfindung in Stufe (a) erhaltene Zwischenprodukt lässt sich durch die folgenden Formeln IVa oder IVb beschreiben: 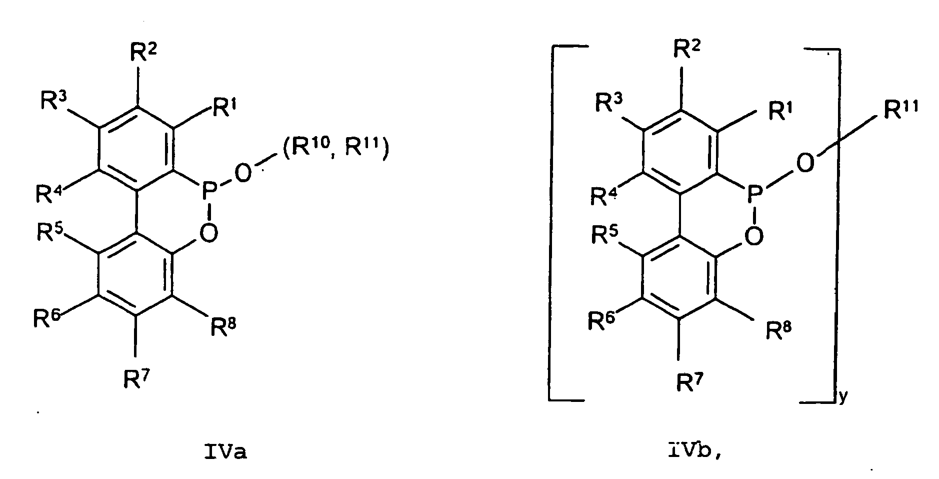 worin die Reste R¹ bis R¹¹ und y die oben angegebenen Bedeutungen haben.

Reaktionsstufe (a) kann erfindungsgemäß ohne weitere Lösungsmittel durchgeführt werden. Falls ein Lösungsmittel verwendet wird, kann dies Benzol, alkylierte Benzole, aliphatische oder cycloaliphatische Ether sein. Im Allgemeinen wird die Reaktion bei Temperaturen von -20 °C bis 120 °C, vorzugsweise 0 °C bis 100 °C, insbesondere 5 °C bis 80 °C durchgeführt. Reaktionsstufe (a) kann bei Normaldruck oder leichtem Überdruck durchgeführt werden.

Insbesondere wenn die Bildung von Produktmischungen vermieden werden soll, kann erfindungsgemäß in Reaktionsstufe (b) das Zwischenprodukt aus Stufe (a) mit mindestens einem weiteren ein-oder mehrwertigen Alkohol unter Bildung eines weiteren Zwischenprodukts umgesetzt werden. Der dabei verwendete Alkohol hat vorzugsweise die Formel IIIb

R¹²(OH)_{y} (IIIb),

in der R¹² eine ein- oder mehrwertige Kohlenwasserstoffgruppe ist, die gegebenenfalls ein oder mehrere Heteroatome ausgewählt aus Sauerstoff, Stickstoff, Schwefel, Phosphor, Silicium und Halogen enthält, und y von 1 bis 10, vorzugsweise 1 bis 4, insbesondere 1, 2, 3 oder 4 beträgt, und der von dem in Stufe (a) verwendeten Alkohol verschieden ist.

In Bezug auf bevorzugte Reste R¹² wird auf die obigen Definitionen zu R¹¹ verwiesen. Diese gelten auch für R¹².

Insbesondere sind die folgenden Ausführungsformen des erfindungsgemäßen Verfahrens möglich:

Sowohl in Stufe (a) als auch in Stufe (b) wird ein einwertiger Alkohol verwendet (y = 1).

In Stufe (a) wird ein einwertiger Alkohol (y = 1) eingesetzt und in Stufe (b) wird ein mehrwertiger Alkohol (y = 2 bis 4) eingesetzt.

Sowohl in Stufe (a) als auch in Stufe (b) wird ein mehrwertiger Alkohol eingesetzt (y = 2 bis 4).

In Stufe (a) wird ein mehrwertiger Alkohol (y = 2 bis 4) eingesetzt, während in Stufe (b) ein einwertiger Alkohol (y = 1) eingesetzt wird.

Die Umsetzung mit mindestens einem weiteren Alkohol in Stufe (b) des erfindungsgemäßen Verfahrens hat den Vorteil, dass man in Stufe (a) preisgünstige Orthocarbonsäureester einsetzen kann, was für den Fall, dass R¹⁰ ungleich R¹¹ ist, zu einem Produktgemisch führt. Durch Umesterung mit einem weiteren Alkohol in Stufe (b) kann dann, falls gewünscht, ein einheitliches Produkt erhalten werden.

Vorzugsweise werden die Reaktionsstufen (a) und (b) in Gegenwart von Katalysatoren durchgeführt. Dies können beispielsweise Lewis-Säuren oder Bronsted-Säuren sein. Insbesondere sind Halogenwasserstoffe, Phosphorsäuren, Schwefelsäuren, insbesondere organische Sulfonsäuren und dergleichen geeignet. Besonders bevorzugt ist Salzsäure oder p-Toluolsulfonsäure. Der oder die Katalysatoren werden vorzugsweise wiedergewonnen.

Die nach Stufe (b) erhaltenen Produkte können durch die Formeln Va oder Vb 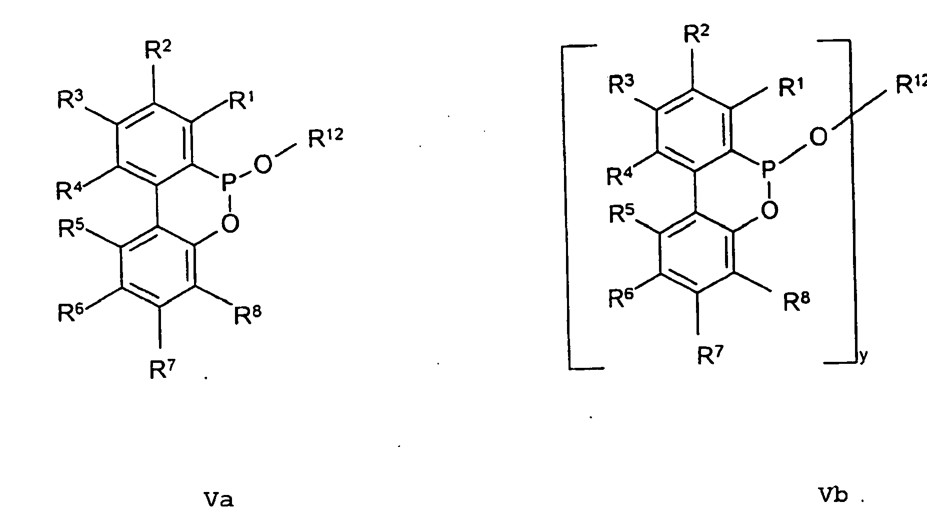 beschrieben werden, worin die Reste R¹ bis R¹² die oben angegebenen Bedeutungen haben.

Nach dem Ende der Reaktionen (a) und/oder (b) wird überschüssiger Alkohol sowie flüchtige Edukte (Orthocarbonsäureester) abdestilliert, z.B. mit Hilfe eines Rotationsverdampfers. Der undestillierte Rückstand, d.h. die Produkte gemäß den Formeln IVa oder IVb bzw. Va oder Vb, kann dann z.B. lösungsmittelfrei oxidiert werden (Stufe (c)). Die Oxidation erfolgt nach im Stand der Technik bekannten Verfahren zur Oxidation von dreibindigem Phosphor. Der undestillierte Rückstand wird entweder lösungsmittelfrei oder in einem inerten Lösungsmittel (z.B. Kohlenwasserstoff wie Toluol oder Petrolether, N-Methylpyrrolidon (NMP), Dimethylformamid (DMF) usw.) mit Oxidationsmitteln wie organischen Peroxiden, z.B. tert-Butylperoxid, Sauerstoff mit oder ohne Katalysator oder Schwefel zu den Oxiden bzw. Thionen umgewandelt.

Bei Durchführung der Oxidation mit wasserfreien, organischen Peroxiden, z.B. tert-Butylperoxid, in inerten Lösungsmitteln wird im Allgemeinen gekühlt, z.B. auf Temperaturen im Bereich von 0 bis 30 °C.

Nach der Oxidation in Stufe (c) werden gegebenenfalls flüchtige Bestandteile im Allgemeinen durch Destillation, gegebenenfalls unter reduziertem Druck oder Vakuum, entfernt, und so das Produkt erhalten. Als abschließendes Reinigungsverfahren kann ein Waschen mit Wasser oder einem Gemisch aus Wasser und Säure erfolgen, um so Katalysatorrückstände und möglicherweise nicht-umgesetztes Edukt (DOP) zu entfernen. Die dabei erhaltene Reinheit des Produkts ist so, dass es ohne weiteres in technischen Anwendungen wie als Flammschutzmittel verwendet werden kann, ohne dass weitere Reinigungs- oder Aufarbeitungsschritte erforderlich sind.

Die unter Einsatz der oben beschriebenen bevorzugten Reaktionskomponenten erhaltenen Produkte lassen sich durch die Formeln VIa oder VIb 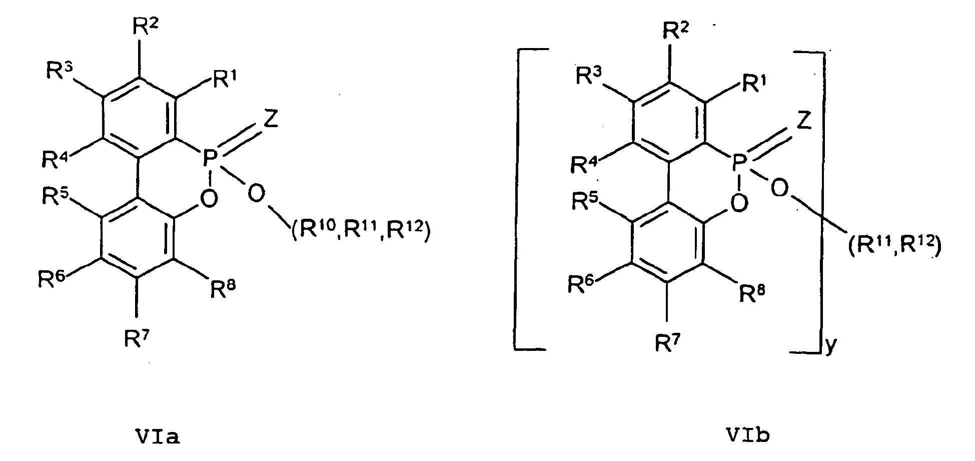 beschreiben, worin R¹ bis R¹² und y die oben angegebenen Bedeutungen haben und Z Sauerstoff oder Schwefel bedeutet. Vorzugsweise sind die Reste R¹ bis R⁸ Wasserstoff, der Rest R¹⁰ Methyl oder Ethyl und die Reste R¹¹ oder R¹² Methyl, Methylen, Methantriyl oder Methantetrayl, Ethyl, Ethylen, Ethantriyl oder Ethantetrayl.

Die Schreibweise (R¹⁰,R") bzw. (R¹⁰, R¹¹, R¹²) bzw. (R¹¹, R¹²) in den Formeln Va/b und VIa/b ist eine abgekürzte Schreibweise für mehrere Alternativen, bei denen jeweils einer der in den Klammerausdrücken aufgezählten Reste vorhanden ist, während die übrigen Reste nicht vorhanden sind.

Kunststoffe sind vorzugsweise ausgewählt aus der Gruppe bestehend aus Polyester, Polyamid, Polycarbonat, Polystyrol, Polyethylen, Polypropylen, Phenol- und Epoxidharzen, insbesondere Phenol- und Epoxidharzen. Naturstoffe sind vorzugsweise ausgewählt aus der Gruppe bestehend aus Baumwolle, Wolle, Leinen und Hanf.

Ein erfindungsgemäß hergestelltes flammfestes Epoxidharz enthält vorzugsweise 2 bis 7 Gew.-% Phosphor in der Harzmasse. Dabei ist unter "Harzmasse" nur das Gesamtgewicht von eingesetztem Epoxidharz und erfindungsgemäß hergestelltem Derivat der Formel VI a/b zu verstehen. Weitere gegebenenfalls eingesetzte Komponenten wie Härter, Füllstoff oder Glasfasermatte bleiben bei dieser Bestimmung des Phosphorgehalts außer Betracht. Ein Vorteil des erfindungsgemäß flammfest ausgerüsteten Epoxidharzes besteht darin, dass es unter Verwendung eines reaktiven Derivats (z.B. R¹⁰ und/oder R¹¹ gleich Allyl oder Glycidyl) hergestellt werden kann. Mindestens ein Teil des reaktiven Derivats der Formel I reagiert dann mit dem Epoxidharz und/oder dem gegebenenfalls eingesetzten Härter. Es ist erfindungsgemäß bevorzugt, dass mindestens 50 Gew.-% des Phosphorgehalts chemisch in das Epoxidharz eingebunden sind.

Bevorzugte Ausführungsformen und Vorteile der vorliegenden Erfindung ergeben sich insbesondere aus den Beispielen.

Die folgenden Beispiele 1 bis 4 illustrieren die Reaktionsstufe (a) des erfindungsgemäßen Verfahrens:

### Beispiel 1

### 9,10-Dihydro-9-oxa-10-methoxyphosphaphenanthren (6H-Methoxy-(6H)-dibenz[c,e][1,2]-oxaphosphorin) aus DOP und Trimethylorthoformiat in Methanol

1,33 mol (287,5 g) DOP und 2,5 ml konz. HCl wurden in 1230 ml Methanol gelöst und die Mischung wurde auf 85 °C zum Rückfluss erhitzt (leichter Überdruck). Nach 45 min wurden weitere 0,5 ml konz. HCl zugegeben und anschließend innerhalb von 5 h, 2,7 mol (295 ml) Trimethylorthoformiat zugetropft. Während des Zutropfens des Trimethylorthoformiats wurden alle 30 min jeweils 0,5 ml konz. HCl zugefügt. Nach Beendigung der Reaktion wurden alle flüchtigen Bestandteile am Rotationsverdampfer unter reduziertem Druck entfernt. Der gelbe, ölige Rückstand wurde im Feinvakuum (0,1 mbar) destilliert. Bei 130 bis 155 °C destillierte das Produkt als farblose, ölige Flüssigkeit, welche langsam nach mehreren Wochen erstarrt. Ausbeute: 265 g, 87 % der Theorie.

### Beispiel 2

### 9,10-Dihydro-9-oxa-10-ethoxyphosphaphenanthren (10-Ethoxy-(6H)-dibenz[c,e] [1,2] -oxaphosphorin) aus DOP, Ethanol und Trimethylorthoformiat

0,2 mol (43,2 g) DOP und 0,5 ml konz. HCl wurden in 352 ml Ethanol gelöst und die Mischung wird auf 90 °C zum Rückfluss erhitzt (leichter Überdruck). Nach 50 min wurden weitere 0,1 ml konz. HCl zugegeben und anschließend innerhalb von 4 h, 0,4 mol (59,3 g, 66,5 ml) Trimethylorthoformiat zugetropft. Während des Zutropfens des Trimethylorthoformiats wurden alle 30 min jeweils 0,1 ml konz. HCl zugegeben. Nach Beendigung der Reaktion wurden alle flüchtigen Bestandteile am Rotationsverdampfer unter reduziertem Druck entfernt. Der gelbe, ölige Rückstand wurde im Feinvakuum (0,1 mbar) destilliert. Bei 135 bis 142 °C destillierte das Produkt als farblose, ölige Flüssigkeit (erstarrte Schmelze Fₚ = 42 °C). Ausbeute: 44,8 g, 92 % der Theorie.

### Beispiel 3

### 9,10-Dihydro-9-oxa-10-ethoxyphosphaphenanthren (10-Ethoxy-(6H)-dibenz[c,e][1,2]-oxaphosphorin) aus DOP, Ethanol und Trimethylorthoformiat

5,0 mol (1081 g) DOP und 2,0 ml konz. HCl wurden in 4400 ml Ethanol gelöst und die Mischung wurde auf 95 °C zum Rückfluss erhitzt (leichter Überdruck). Nach 1 h wurden weitere 1,0 ml konz. HCl zugegeben und anschließend innerhalb von 8 h, 6,5 mol (689,8 g, 711,1 ml) Trimethylorthoformiat zugetropft. Während des Zutropfens des Trimethylorthoformiats wurden alle 30 min jeweils 1,0 ml konz. HCl zugefügt. Nach Beendigung der Reaktion wurden alle flüchtigen Bestandteile am Rotationsverdampfer unter reduziertem Druck entfernt. Der gelbe, ölige Rückstand wurde im Feinvakuum (0,1 mbar) destilliert. Bei 135 bis 142 °C destillierte das Produkt als farblose, ölige Flüssigkeit (erstarrte Schmelze Fₚ = 42 °C). Ausbeute: 1001,0 g, 82 % der Theorie.

### Beispiel 4

### 9,10-Dihydro-9-oxa-10-propoxyphosphaphenanthren (6-Propoxy-(6H)-dibenz[c,e][1,2]-oxaphosphorin) aus DOP, iso-Propanol und Triethylorthoformiat

0,28 mol (59,5 g) DOP und 600 ml iso-Propanol wurden gelöst, 0,6 ml HCl werden zugegeben und die Mischung auf 105 °C zum Rückfluss erhitzt (leichter Überdruck). Nach 1 h wurden weitere 0,15 ml konz. HCl zugegeben und anschließend innerhalb von 3 h, 0,55 mol (81,5 g, 92 ml) Triethylorthoformiat zugetropft. Während des Zutropfens des Triethylorthoformiats wurden alle 15 min jeweils 0,15 ml konz. HCl zugefügt. Nach Beendigung der Reaktion wurden alle flüchtigen Bestandteile am Rotationsverdampfer unter reduziertem Druck entfernt. Der gelbe, ölige Rückstand wurde im Feinvakuum (0,1 mbar) destilliert. Bei 142 bis 145 °C destillierte das Produkt als farblose, ölige Flüssigkeit. Ausbeute: 35,2 g, 78 % der Theorie.

### Beispiel 5

### Oxidation von 9,10-Dihydro-9-oxa-10-methoxyphosphaphenanthren (6-Methoxy-(6H)-dibenz[c,e][l,21-oxaphosphorin).

450 mmol 9,10-Dihydro-9-oxa-10-methoxyphosphaphenanthren (6-Methoxy- (6H) -dibenz [c,e] [1,2] -oxaphosphorin) wurden mit 50 mmol tert-Butylperoxid in 300 ml Toluol in einem Kolben unter Kühlung umgesetzt. Dabei wurde das tert-Butylperoxid so zugetropft, dass die Temperatur des Gemisches 30 °C nicht überschritt. Nach lstündigem Nachrühren, Waschen mit wässriger Natriumsulfit- und Natriumchloridlösung wurde das rohe 9,10-Dihydro-9-oxa-10-methoxyphosphaphenanthren-10-oxid (6-Methoxy-(6H)-dibenz[c,e][1,2]-oxaphosphorin-6-oxid) nach Einengen am Rotationsverdampfer in über 90%iger Reinheit erhalten.

Als Ausgangsstoffe für diese Oxidation können auch die undestillierten Zwischenprodukte der Reaktionsstufen (a) oder (b) (siehe Beispiele 1 bis 4) verwendet werden.

## Patentansprüche

1. Verfahren zur Herstellung von 9,10-Dihydro-9-oxa-10-organyloxyphosphaphenanthren-10-oxid oder -thion und an den Phenylgruppen substituierten Derivaten derselben, bei dem:
(a) 9,10-Dihydro-9-oxa-10-phosphaphenanthren-10-oxid oder ein Derivat desselben in Gegenwart von mindestens einem ein- oder mehrwertigen Alkohol mit mindestens einem Orthocarbonsäureester unter Bildung eines ersten Zwischenprodukts umgesetzt wird,
(b) das Zwischenprodukt aus Stufe (a) gegebenenfalls mit mindestens einem weiteren ein- oder mehrwertigen Alkohol unter Bildung eines weiteren Zwischenprodukts umgesetzt wird und
(c) das Zwischenprodukt aus den Stufen (a) oder (b) durch Zugabe von Oxidationsmittel in 9,10-Dihydro-9-oxa-10-organyloxyphosphaphenanthren-10-oxid oder -thion oder ein an den Phenygruppen substituiertes Derivat derselben überführt wird.

2. Verfahren nach Anspruch 1, **dadurch gekennzeichnet, dass** in Stufe (a) ein 9,10-Dihydro-9-oxa-10-phosphaphenanthren-10-oxid-Derivat der Formeln Ia oder Ib 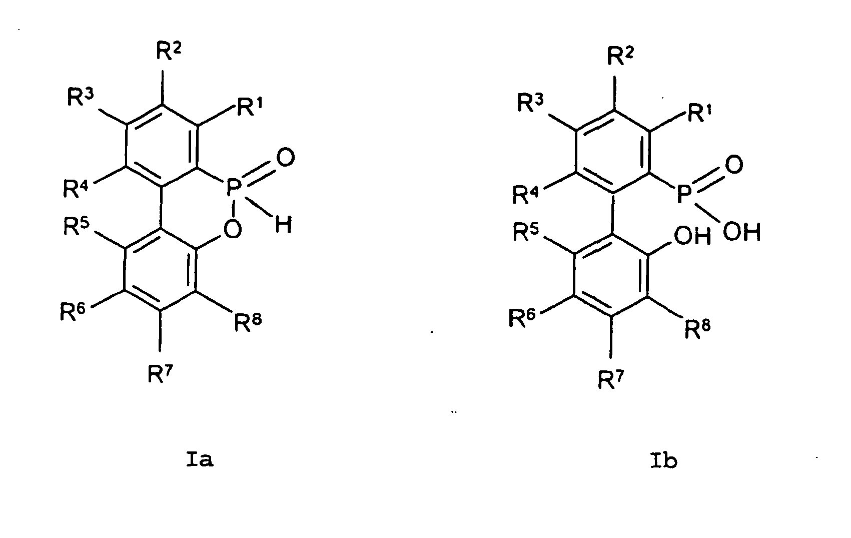 verwendet wird, worin R¹ bis R⁸ unabhängig voneinander ein Wasserstoffatom, Halogenatom oder eine Köhlenwasserstoffgruppe sind, wobei die Kohlenwasserstoffgruppen gegebenenfalls ein oder mehrere Heteroatome ausgewählt aus Sauerstoff, Stickstoff, Schwefel, Phosphor, Silicium und Halogen enthalten, und zwei oder mehr der Reste R¹ bis R⁸ gegebenenfalls unter Ausbildung von einem oder mehreren Cyclen verknüpft sind.

3. Verfahren nach Anspruch 1, **dadurch gekennzeichnet, dass** in Stufe (a) ein Orthocarbonsäureester der Formel II
R⁹C(OR¹⁰)₃ (II)
verwendet wird, in der R⁹ ein Wasserstoffatom oder eine Kohlenwasserstoffgruppe ist und die Reste R¹⁰ gleiche oder unterschiedliche Kohlenwasserstoffgruppen sind, die gegebenenfalls ein oder mehrere Heteroatome ausgewählt aus Sauerstoff, Stickstoff, Schwefel, Phosphor, Silicium und Halogen enthalten.

4. Verfahren nach Anspruch 1, **dadurch gekennzeichnet, dass** in Stufe (a) ein Alkohol der Formel IIIa
R¹¹(OH)_{y} (IIIa)
verwendet wird, in der R¹¹ eine ein- oder mehrwertige Kohlenwasserstoffgruppe ist, die gegebenenfalls ein oder mehrere Heteroatome ausgewählt aus Sauerstoff, Stickstoff, Schwefel, Phosphor, Silicium und Halogen enthält, und y von 1 bis 10, vorzugsweise 1 bis 4, insbesondere 1, 2, 3 oder 4 beträgt.

5. Verfahren nach einem der vorhergehenden Ansprüche, **dadurch gekennzeichnet, dass** in Stufe (b) ein Alkohol gemäß Formel IIIb
R¹²(OH)_{y} (IIIb)
verwendet wird, in der R¹² eine ein- oder mehrwertie Kohlenwasserstoffgruppe ist, die gegebenenfalls ein oder mehrere Heteroatome ausgewählt aus Sauerstoff, Stickstoff, Schwefel, Phosphor, Silicium und Halogen enthält, und y von 1 bis 10, vorzugsweise 1 bis 4, insbesondere 1, 2, 3 oder 4 beträgt, und der von dem in Stufe (a) verwendeten Alkohol verschieden ist.

6. Verfahren nach einem der vorhergehenden Ansprüche, **dadurch gekennzeichnet, dass** y für die in den Stufen (a) und (b) verwendeten Alkohole jeweils 1 ist.

7. Verfahren nach einem der Ansprüche 1 bis 5, **dadurch gekennzeichnet, dass** für den in Stufe (a) verwendeten Alkohol y = 1 ist und für den in Stufe (b) verwendeten Alkohol y = 2 bis 4 ist.

8. Verfahren nach einem der Ansprüche 1 bis 5, **dadurch gekennzeichnet, dass** für den in Stufe (a) verwendeten Alkohol y = 2 bis 4 ist.

9. Verfahren nach einem der Ansprüche 1 bis 5, **dadurch gekennzeichnet, dass** y für die in den Stufen (a) und (b) verwendeten Alkohole jeweils 2 bis 4 ist.

10. Verfahren nach einem der Ansprüche 1 bis 5, **dadurch gekennzeichnet, dass** für den in Stufe (a) verwendeten Alkohol y = 2 bis 4 ist und für den in Stufe (b) verwendeten Alkohol y = 1 ist.

11. Verfahren nach einem der vorhergehenden Ansprüche, **dadurch gekennzeichnet, dass** das in Stufe (a) erhaltene Produkt die Formeln IVa oder IVb 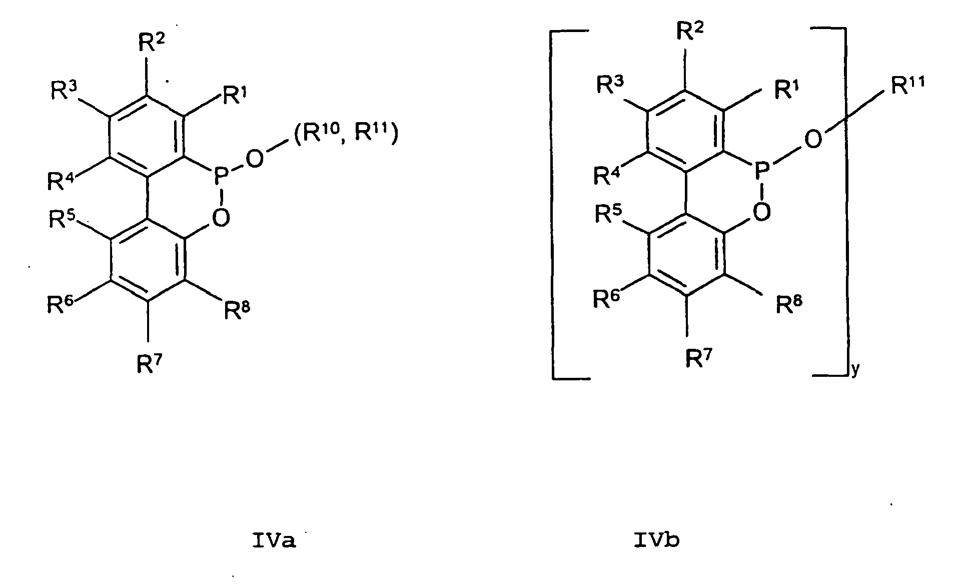 hat, worin die Reste R¹ bis R¹¹ und y die in den Ansprüchen 2 bis 4 angegebenen Bedeutungen haben.

12. Verfahren nach einem der vorhergehenden Ansprüche, **dadurch gekennzeichnet, dass** das in Stufe (b) erhaltene Produkt die Formeln Va oder Vb 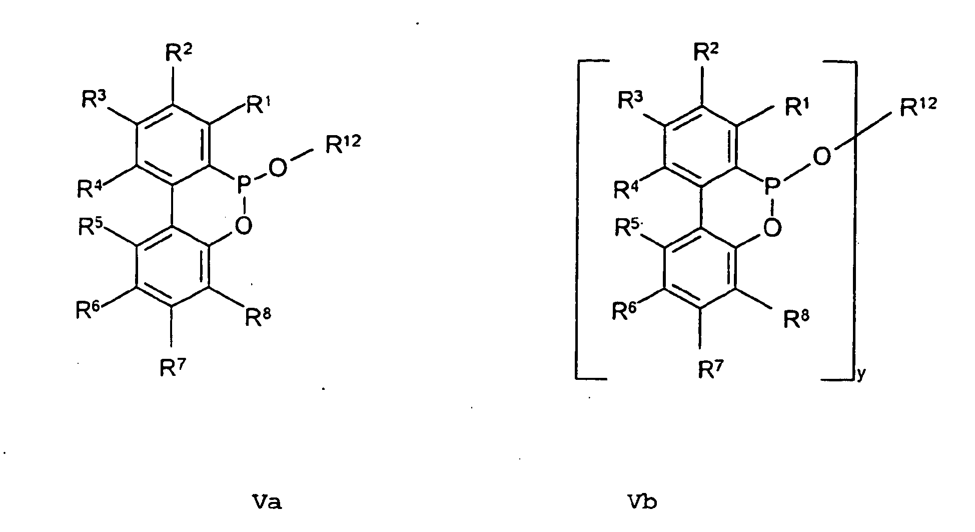 hat, worin die Reste R¹ bis R¹² und y die in den Ansprüchen 2 bis 5 angegebenen Bedeutungen haben.

13. Verfahren nach einem der vorhergehenden Ansprüche, **dadurch gekennzeichnet, dass** in Stufe (a) 9,10-Dihydro-9-oxa-10-phosphaphenanthren-10-oxid eingesetzt wird.

14. Verfahren nach einem der vorhergehenden Ansprüche, **dadurch gekennzeichnet, dass** als Orthocarbonsäureester ein Orthoameisensäureester ausgewählt aus der Gruppe bestehend aus Trimethylorthoformiat, Triethylorthoformiat und Triallylorthoformiat verwendet wird.

15. Verfahren nach Anspruch 14, **dadurch gekennzeichnet, dass** der einwertige Alkohol (y = 1) ausgewählt ist aus der Gruppe bestehend aus Methanol, Ethanol und Isopropanol.

16. Verfahren nach Anspruch 14, **dadurch gekennzeichnet, dass** der mehrwertige Alkohol (y = 2 bis 4) ausgewählt ist aus der Gruppe bestehend aus einem Diol, Glykol, Polyglykol, dreiwertigem Alkohol und vierwertigem Alkohol.

17. Verfahren nach Anspruche 16, **dadurch gekennzeichnet, dass** der mehrwertige Alkohol ausgewählt ist aus der Gruppe bestehend aus Ethylenglykol, Glycerin und Pentaerythrit.

18. Verfahren nach einem oder mehreren der vorhergehenden Ansprüche, **dadurch gekennzeichnet, dass** das Oxidationsmittel in Stufe (c) ausgewählt ist aus Sauerstoff und Schwefel.

19. Verfahren nach einem oder mehreren der vorhergehenden Ansprüche, **dadurch gekennzeichnet, dass** das in Stufe (c) erhaltene Produkt die Formel VIa oder VIb. 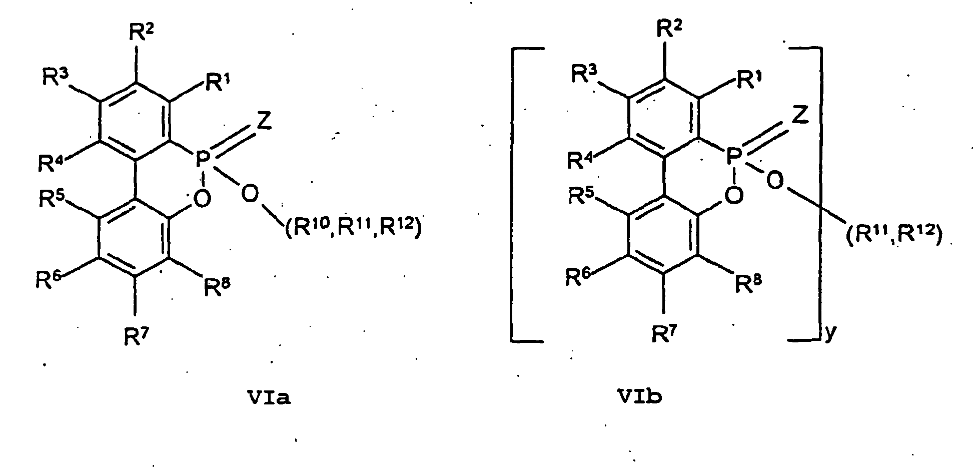 aufweist, worin R¹ bis R¹² und y wie in den Ansprüchen 2 bis 5 definiert sind und Z = O oder S ist.

20. Verfahren nach einem der vorhergehenden Ansprüche 1 bis 19, **dadurch gekennzeichnet, dass** in den Stufen (a) und/oder (b) ein Katalysator ausgewählt aus der Gruppe bestehend aus Lewis-Säuren und Brönsted-Säuren verwendet wird.

21. Verfahren nach Anspruch 20, **dadurch gekennzeichnet, dass** der Katalysator ausgewählt ist aus Halogenwasserstoffen und organischen Sulfonsäuren ist.

22. Verfahren nach Anspruch 21, **dadurch gekennzeichnet, dass** der Katalysator Salzsäure oder p-Toluolsulfonsäure ist.

23. Verfahren nach einem der Ansprüche 20 bis 22, **dadurch gekennzeichnet, dass** überschüssiger Alkohol entfernt und der in den Stufen (a) und/oder (b) verwendete Katalysator wiedergewonnen wird.

24. Verfahren nach einem der vorhergehenden Ansprüche, **dadurch gekennzeichnet, dass** die Reaktionsstufen (a) bis (c) in einem Reaktionsgefäß durchgeführt werden.

## Claims

1. Process for the preparation of 9,10-dihydro-9-oxa-10-organyloxyphosphaphenanthrene-10-oxide or -thione and derivatives of same substituted on the phenyl groups, wherein
(a) 9,10-dihydro-9-oxa-10-phosphaphenanthrene-10-oxide or a derivative of same is reacted in the presence of at least one mono- or polyhydric alcohol with at least one ortho ester with formation of a first intermediate product,
(b) the intermediate product from step (a) is optionally reacted with at least one further mono- or polyhydric alcohol with formation of a further intermediate product and
(c) the intermediate product from step (a) or (b) is transformed by addition of oxidation agent into 9,10-dihydro-9-oxa-10-organyloxyphosphaphenanthrene-10-oxide or -thione or a derivative of same substituted on the phenyl groups.

2. Process according to claim 1, **characterized in that** in step (a) a 9,10-dihydro-9-oxa-10-phosphaphenanthrene-10-oxide derivative of Formula Ia or Ib 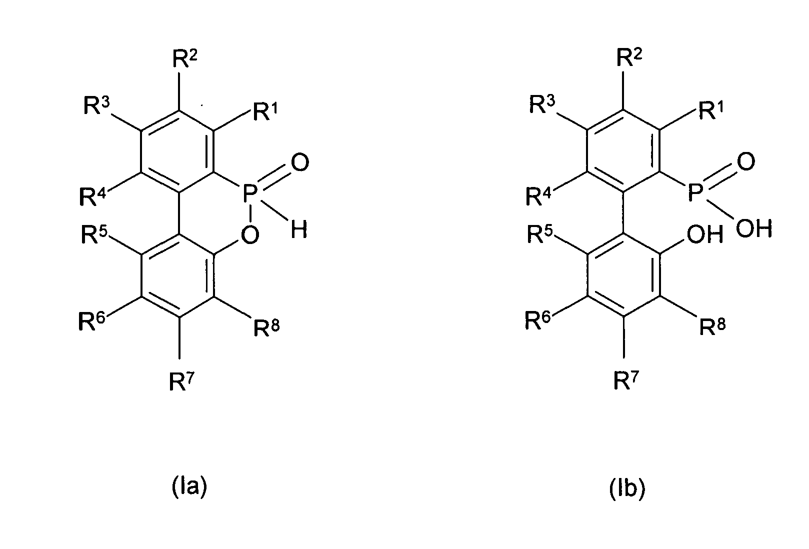 is used in which R¹ to R⁸, independently of each other, are a hydrogen atom, halogen atom or a hydrocarbon group, the hydrocarbon groups optionally containing one or more heteroatoms selected from oxygen, nitrogen, sulphur, phosphorus, silicon and halogen, and two or more radicals R¹ to R⁸ being optionally linked with formation of one or more cycles.

3. Process according to claim 1, **characterized in that** in step (a) an ortho ester of Formula II
R⁹C(OR¹⁰)₃ (II)
is used in which R⁹ is a hydrogen atom or a hydrocarbon group and the radicals R¹⁰ are the same or different hydrocarbon groups which optionally contain one or more heteroatoms selected from oxygen, nitrogen, sulphur, phosphorus, silicon and halogen.

4. Process according to claim 1, **characterized in that** in step (a) an alcohol of Formula IIIa
R¹¹(OH)_{y} (IIIa)
is used in which R¹¹ is a mono- or polyvalent hydrocarbon group which optionally contains one or more heteroatoms selected from oxygen, nitrogen, sulphur, phosphorus, silicon and halogen, and y is 1 to 10, preferably 1 to 4, in particular 1, 2, 3 or 4.

5. Process according to one of the previous claims, **characterized in that** in step (b) an alcohol according to Formula IIIb
R¹²(OH)_{y} (IIIb)
is used in which R¹² is a mono- or polyvalent hydrocarbon group which optionally contains one or more heteroatoms selected from oxygen, nitrogen, sulphur, phosphorus, silicon and halogen, and y is 1 to 10, preferably 1 to 4, in particular 1, 2, 3 or 4 and the alcohol is different from that used in step (a).

6. Process according to one of the previous claims, **characterized in that** y is 1 for the alcohols used in each of the steps (a) and (b).

7. Process according to one of claims 1 to 5, **characterized in that** y = 1 for the alcohol used in step (a) and y = 2 to 4 for the alcohol used in step (b).

8. Process according to one of claims 1 to 5, **characterized in that** y = 2 to 4 for the alcohol used in step (a).

9. Process according to one of claims 1 to 5, **characterized in that** y is 2 to 4 for the alcohols used in each of the steps (a) and (b).

10. Process according to one of claims 1 to 5, **characterized in that** y = 2 to 4 for the alcohol used in step (a) and y = 1 for the alcohol used in step (b).

11. Process according to one of the previous claims, **characterized in that** the product obtained in step (a) has the Formula IVa or IVb 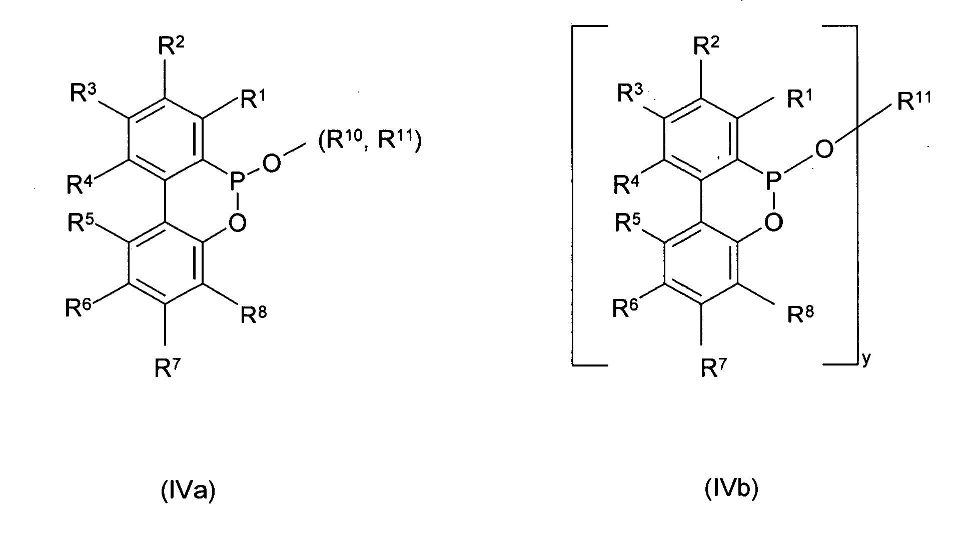 in which the radicals R¹ to R¹¹ and y have the meanings given in claims 2 to 4.

12. Process according to one of the previous claims, **characterized in that** the product obtained in step (b) has the Formula Va or Vb 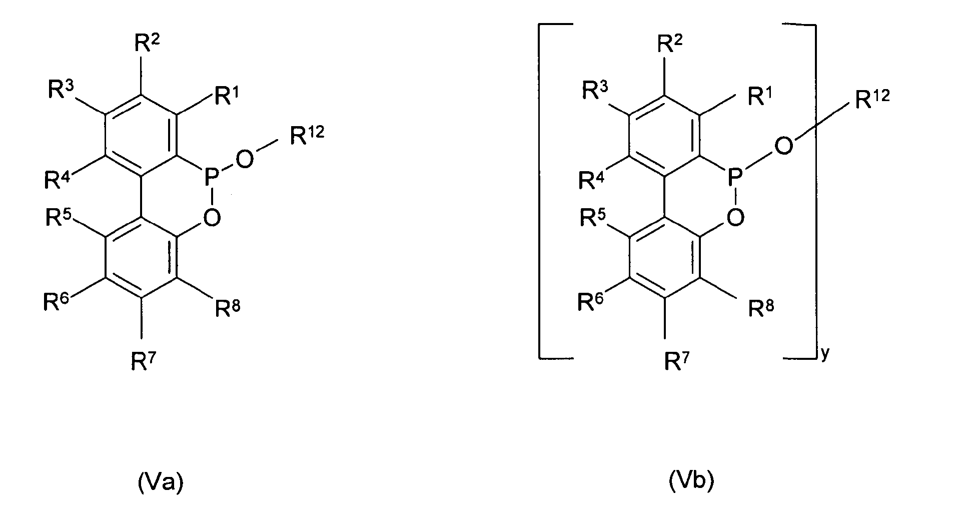 in which the radicals R¹ to R¹² and y have the meanings given in claims 2 to 5.

13. Process according to one of the previous claims, **characterized in that** 9,10-dihydro-9-oxa-10-phosphaphenanthrene-10-oxide is used in step (a).

14. Process according to one of the previous claims, **characterized in that** an orthoformic acid ester selected from the group consisting of trimethyl orthoformate, triethyl orthoformate and triallyl orthoformate is used as ortho ester.

15. Process according to claim 14, **characterized in that** the monohydric alcohol (y = 1) is selected from the group consisting of methanol, ethanol and isopropanol.

16. Process according to claim 14, **characterized in that** the polyhydric alcohol (y = 2 to 4) is selected form the group consisting of a diol, glycol, polyglycol, trihydric alcohol and tetrahydric alcohol.

17. Process according to claim 16, **characterized in that** the polyhydric alcohol is selected from the group composed of ethylene glycol, glycerol and pentaerythritol.

18. Process according to one or more of the previous claims, **characterized in that** the oxidation agent in step (c) is selected from oxygen and sulphur.

19. Process according to one or more of the previous claims, **characterized in that** the product obtained in step (c) has the Formula VIa or VIb 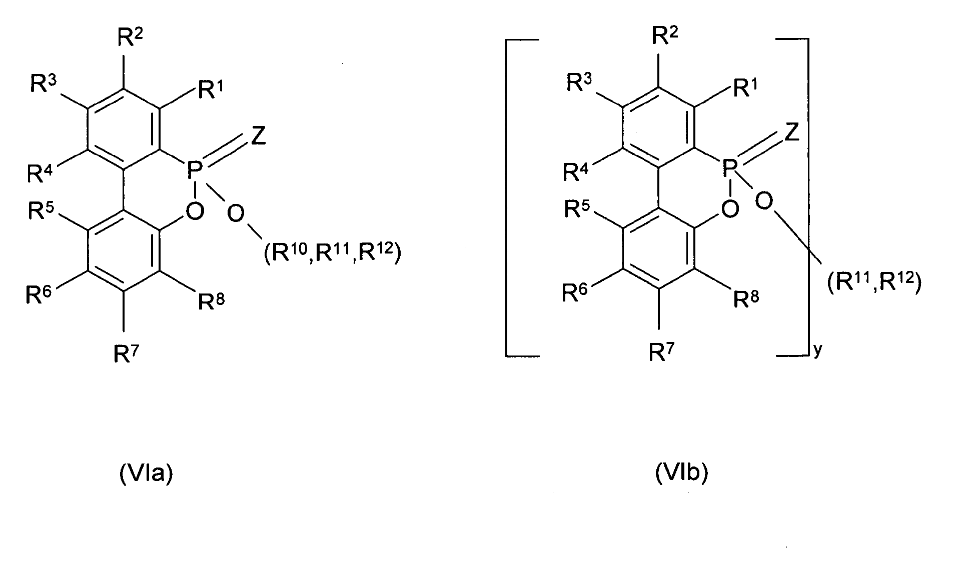 in which R¹ to R¹² and y are defined as in claims 2 to 5 and Z = O or S.

20. Process according to one of the previous claims 1 to 19, **characterized in that** a catalyst selected from the group consisting of Lewis acids and Brönsted acids is used in steps (a) and/or (b).

21. Process according to claim 20, **characterized in that** the catalyst is selected from hydrogen halides and organic sulphonic acids.

22. Process according to claim 21, **characterized in that** the catalyst is hydrochloric acid or p-toluenesulphonic acid.

23. Process according to one of claims 20 to 22, **characterized in that** excess alcohol is removed and the catalyst used in steps (a) and/or (b) is recovered.

24. Process according to one of the previous claims, **characterized in that** reaction steps (a) to (c) are carried out in a reaction vessel.

## Revendications

1. Procédé de production de 9,10-dihydro-9-oxa-10-organyloxyphosphaphénanthrène-10-oxyde ou -thione et de leurs dérivés substitués sur les groupes phényle, dans lequel :
(a) du 9,10-dihydro-9-oxa-10-phosphaphénanthrène-10-oxyde ou un dérivé de ce composé est amené à réagir avec au moins un ester d'acide orthocarboxylique en présence d'au moins un monoalcool ou polyalcool avec formation d'un premier produit intermédiaire,
(b) le produit intermédiaire venant de l'étape (a) est éventuellement amené à réagir avec au moins un autre monoalcool ou polyalcool avec formation d'un autre produit intermédiaire, et
(c) le produit intermédiaire venant des étapes (a) ou (b) est transformé, par addition d'agent oxydant, en 9,10-dihydro-9-oxa-10-organyloxyphosphaphénanthrène-10-oxyde ou -thione ou en un dérivé substitué sur les groupes phényle de ces composés.

2. Procédé suivant la revendication 1, **caractérisé en ce qu'**on utilise dans l'étape (a) un dérivé de 9,10-dihydro-9-oxa-10-phosphaphénanthrène-10-oxyde de formules Ia ou Ib 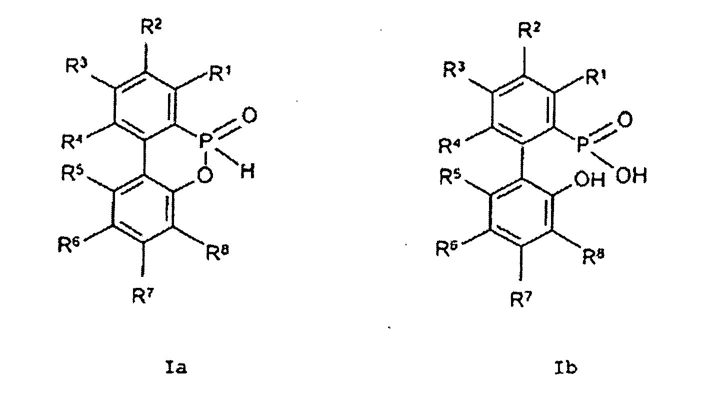 dans lesquelles R¹ à R⁸ représentent indépendamment les uns des autres un atome d'hydrogène, un atome d'halogène ou un groupe hydrocarboné, les groupes hydrocarbonés contenant éventuellement un ou plusieurs hétéroatomes choisis entre oxygène, azote, soufre, phosphore, silicium et halogène, et deux ou plus de deux des restes R¹ à R⁸ étant éventuellement liés en formant un ou plusieurs cycles.

3. Procédé suivant la revendication 1, **caractérisé en ce qu'**on utilise dans l'étape (a) un ester d'acide orthocarboxylique de formule II
R⁹C(OR¹⁰)₃ (II)
dans laquelle R⁹ est un atome d'hydrogène ou un groupe hydrocarboné et les restes R¹⁰ sont des groupes hydrocarbonés identiques ou différents qui contiennent éventuellement un ou plusieurs hétéroatomes choisis entre oxygène, azote, soufre, phosphore, silicium et halogène.

4. Procédé suivant la revendication 1, **caractérisé en ce qu'**on utilise dans l'étape (a) un alcool de formule IIIa
R¹¹(OH)_{y} (IIIa)
dans laquelle R¹¹ est un groupe hydrocarboné monovalent ou polyvalent qui contient éventuellement un ou plusieurs hétéroatomes choisis entre oxygène, azote, soufre, phosphore, silicium et halogène et y a une valeur de 1 à 10, avantageusement une valeur de 1 à 4, en particulier la valeur 1, 2, 3 ou 4.

5. Procédé suivant l'une des revendications précédentes, **caractérisé en ce qu'**on utilise dans l'étape (b) un alcool qui répond à la formule IIIb
R¹²(OH)_{y} (IIIb)
dans laquelle R¹² est un groupe hydrocarboné monovalent ou polyvalent qui contient avantageusement un ou pluseurs hétéroatomes choisis entre oxygène, azote, soufre, phosphore, silicium et halogène et y a une valeur de 1 à 10, avantageusement une valeur de 1 à 4 , en particulier la valeur 1, 2, 3 ou 4, et qui est différent de l'alcool utilisé dans l'étape (a).

6. Procédé suivant l'une des revendications précédentes, **caractérisé en ce que** y a dans chaque cas la valeur 1 pour les alcools utilisés dans les étapes (a) et (b).

7. Procédé suivant l'une des revendications 1 à 5, **caractérisé en ce que** y a la valeur 1 pour l'alcool utilisé dans l'étape (a) et une valeur de 2 à 4 pour l'alcool utilisé dans l'étape (b).

8. Procédé suivant l'une des revendications 1 à 5, **caractérisé en ce que** y a une valeur de 2 à 4 pour l'alcool utilisé dans l'étape (a).

9. Procédé suivant l'une des revendications 1 à 5, **caractérisé en ce que** y a dans chaque cas une valeur de 2 à 4 pour les alccols utilisés dans les étapes (a) et (b).

10. Procédé suivant l'une des revendications 1 à 5, **caractérisé en ce que** y a une valeur de 2 à 4 pour l'alcool utilisé dans l'étape (a) et la valeur 1 pour l'alcool utilisé dans l'étape (b).

11. Procédé suivant l'une des revendications précédentes, **caractérisé en ce que** le produit obtenu dans l'étape (a) répond aux formules IVa ou IVb 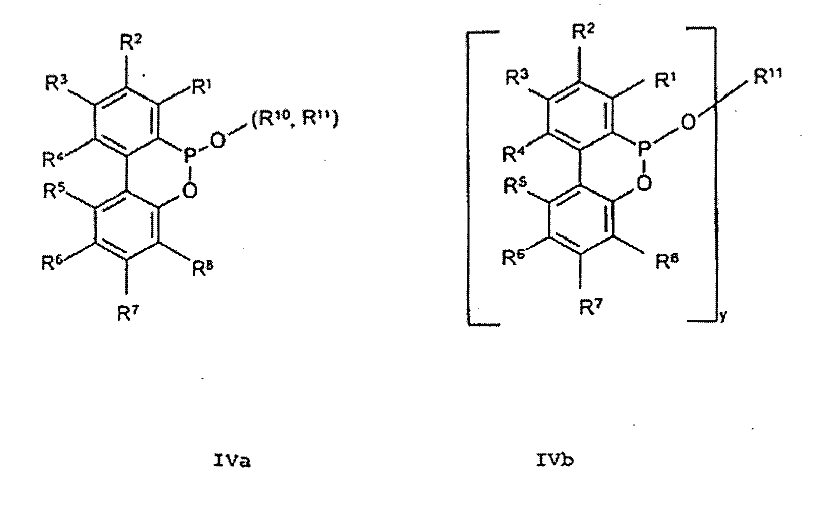 dans lesquelles les restes R¹ à R¹¹ et y ont les définitions indiquées dans les revendications 2 à 4.

12. Procédé suivant l'une des revendications précédentes, **caractérisé en ce que** le produit obtenu dans l'étape (b) répond aux formules Va ou Vb 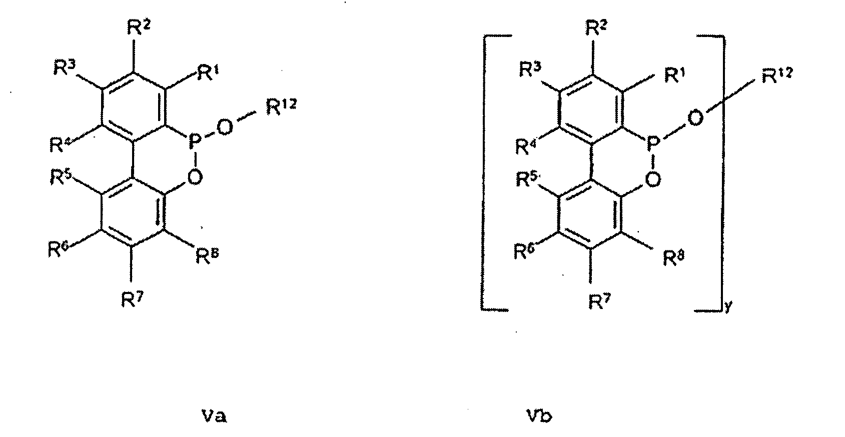 dans lesquelles les restes R¹ à R¹³ et y ont les définitions indiquées dans les revendications 2 à 5.

13. Procédé suivant l'une des revendications précédentes, **caractérisé en ce que** du 9,10-dihydro-9-oxa-10-phosphaphénanthrène-10-oxyde est utilisé dans l'étape (a).

14. Procédé suivant l'une des revendications précédentes, **caractérisé en ce qu'**on utilise comme ester d'acide orthocarboxylique un ester d'acide orthoformique choisi dans le groupe constitué de l'orthoformiate de triméthyle, l'orthoformiate de triéthyle et l'orthoformiate de triallyle.

15. Procédé suivant la revendication 14, **caractérisé en ce que** le monoalcool (y = 1) est choisi dans le groupe constitué du méthanol, de l'éthanol et de l'isopropanol.

16. Procédé suivant la revendication 14, **caractérisé en ce que** l'alcool polyvalent (y = 2 à 4) est choisi dans le groupe constitué d'un diol, du glycol, d'un polyglycol, d'un alcool trivalent et d'un alcool tétravalent.

17. Procédé suivant la revendication 16, **caractérisé en ce que** l'alcool tétravalent est choisi dans le groupe constitué de l'éthylèneglycol, du glycérol et du pentaérythritol.

18. Procédé suivant une ou plusieurs des revendications précédentes, **caractérisé en ce que** l'agent oxydant dans l'étape (c) est choisi entre l'oxygène et le soufre.

19. Procédé suivant l'une des revendications précédentes, **caractérisé en ce que** le produit obtenu dans l'étape (c) répond à la formule VIa ou VIb 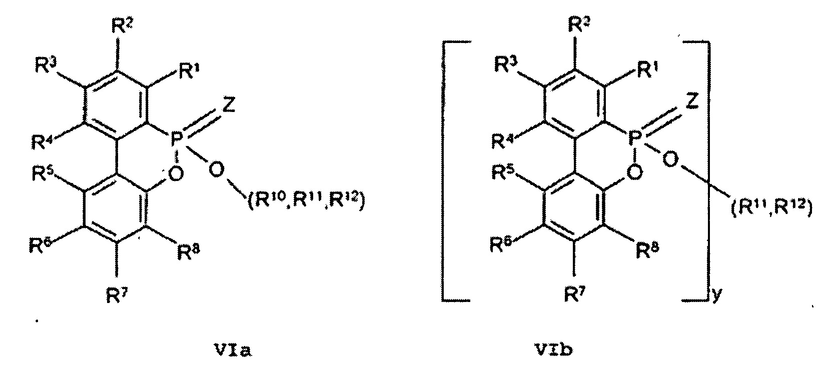 dans laquelle les restes R¹ à R¹² et y ont les définitions indiquées dans les revendications 2 à 5 et Z représente O ou S.

20. Procédé suivant l'une des revendications 1 à 19, **caractérisé en ce qu'**on utilise dans les étapes (a) et/ou (b) un catalyseur choisi dans le groupe constitué d'acides de Lewis et d'acides de Brônsted.

21. Procédé suivant la revendication 20, **caractérisé en ce que** le catalyseur est choisi parmi des acides halogénhydriques et des acides organiques sulfoniques.

22. Procédé suivant la revendication 21, **caractérisé en ce que** le catalyseur est l'acide chlorhydrique ou l'acide p-toluènesulfonique.

23. Procédé suivant l'une des revendications 20 à 22, **caractérisé en ce que** l'alcool en excès est éliminé et le catalyseur utilisé dans les étapes (a) et/ou (b) est récupéré.

24. Procédé suivant l'une des revendications précédentes, **caractérisé en ce que** les étapes réactionnelles (a) à (c) sont conduites dans un seul récipient de réaction.
